# EUROPEAN PATENT SPECIFICATION

(11) **EP 2 609 007 B1**
(45) Date of publication and mention of the grant of the patent: **11.04.2018**
(21) Application number: 11770187.0
(22) Date of filing: 25.08.2011
(51) Int. Cl.: B63H 21/14, B63H 25/12

(54) **A METHOD AND ARRANGEMENT FOR PROVIDING LNG FUEL FOR SHIPS**
VERFAHREN UND ANORDNUNG ZUR BEREITSTELLUNG VON FLÜSSIGERDGAS ALS KRAFTSTOFF FÜR SCHIFFE
PROCÉDÉ ET DISPOSITIF POUR FOURNIR DU COMBUSTIBLE GNL POUR NAVIRES

(30) Priority: 25.08.2010 NO 20101189
(43) Date of publication of application: 03.07.2013
(73) Proprietor: Wärtsilä Gas Solutions Norway AS, 1383 Asker (NO)
(72) Inventor: AARSETH, Harald, N-0256 Oslo (NO)
(74) Representative: Oslo Patentkontor AS
(86) International application number: PCT/NO2011/000235
(87) International publication number: WO 2012/026828

(56) References cited:
- US-A- 2 795 937
- US-A- 3 857 245
- US-A- 3 864 918
- US-A1- 2006 053 806
- US-A1- 2008 276 627

## Description

The subject invention is related to transportation of liquefied gases at sea, and in particular for liquefied gases with a boiling temperature higher than minus 48 °C. Examples for such liquefied gases are propane, butanes, propylenes, vinyl chloride, butadiene, butylenes, ammonia, etc.
A common name for propane and butane is liquefied petroleum gases (LPG).
The invention might also to a certain extent be applied for gases with boiling temperatures as low as minus 105 °C, and for liquefied gases as ethylene and ethane. In the later years much attention has been drawn to the quality of bunker fuel for ships.
The common fuel for ocean-going ships has up to now been heavy fuel oil of different qualities.
However, due to environmental considerations, restrictions will be applied for use of such fuels in the future.
As alternative to heavy fuel oil, natural gas (mainly methane) is emerging, and has been applied for different types of ships.
Natural gas is a clean fuel, and with almost no emissions for nitrogen oxides and particles, and as well with about 25% less emissions of CO2 compared to oil.

US2795937 discloses a method and an arrangement for providing liquefied natural gas (LNG) as fuel for propulsion of a ship. An object of the subject invention is to make natural gas a especially useful and beneficial fuel for ships transporting liquefied gases with boiling temperatures higher than minus 48 °C, and to a certain extent also for liquefied gases with boiling temperatures as low as minus 105 °C.
The natural gas as fuel to ships are received in a liquid state (LNG= liquefied natural gas), and is stored in separate bunker tanks that might be of various configuration.
The storage temperature of the LNG is about minus 160 °C.

However, prior to combustion at engine(s) in the engine room, the temperature of the natural gas has to be at about ambient temperature.

Accordingly, the LNG has to be vaporized and heated prior to use in engines.

Ships for transporting the liquefied gases as indicated above are normally provided with power-consuming devices for reliquefaction of vaporized gases (cargo).

Even the cargo tanks are insulated, some heat will leak into the cargo tanks, and some of the cargo will vaporize during voyage and in harbour.

In order to keep the gas pressure at permissible level in cargo tanks, the vapour has to be condensed in a reliquefaction plant, and returned to the cargo tanks in a liquid state.

The basic idea of the subject invention is to combine the energy demand for vaporization and/or heating of the LNG as fuel for propulsion of the ship, and the simultaneous energy released by condensation of the vaporized gases from the cargo tanks.

Preliminary calculations indicate an approximate balance between the energy demand for vaporization and/or heating of the necessary quantity of LNG for propulsion of the ship, and the simultaneously released energy at the re-liquefaction of the vaporized quantity of cargo.

The same heat exchanging principle is also normally applicable on ballasted voyages where the cargo tanks are almost empty for liquid contents, but still kept in a cold condition with a vapour atmosphere. The heat leakage from surroundings will tend to increase the cargo tank vapour pressure, but the heat exchanging with LNG will keep the pressure at low level, and which is beneficial for efficient loading of cargo in next harbour.

However, if any significant energy difference between vaporization and/or partial heating of LNG and re-liquefaction of cargo is calculated, the thickness of insulation for cargo tanks might be applied as a parameter for making better energy balance.

The vaporization and/or heating of LNG and the simultaneous condensation of liquefied cargo might be arranged in one or more heat exchangers, and in case the ship shall be arranged for transporting two or more different liquefied gas cargoes at a time, then the number of heat exchangers have to be provided accordingly for segregation of the cargoes.

Alternatively, the heat exchanging between LNG and vaporized cargo can take place in the vapour space of each cargo tank, and for example by letting the LNG be circulated in pipe coils, and the pipe coils can be provided with fins for improved performance.

An indirect heat transfer system might as well be applied, and whereby heat energy is transferred from the condensation of cargo to a circulating third medium (for example propane), and the energy is transferred from the third medium in a heat exchanger for vaporization and/or heating of the LNG.

The ship type for liquefied gas transportation with LNG fuelling will environmentally be very attractive with regard to emissions to air of harmful substances, and as well with regard to emission of greenhouse gases, and is expected to be in compliance with all future regulations and legislations for the said matters.

Moreover, the following significant cost savings are provided by the invention compared to a ship for transporting liquefied gases and applying fuel oils for propulsion:
- Reduced number of refrigerating modules for re-liquefaction, and including associated pipe and electric cable systems, as the refrigerating modules now basically shall act as back-up only to the re-liquefaction by heat exchanging to the vaporization and/or heating of the LNG.
- Reduced (or no) energy costs for running the re-liquefaction plant at loaded sea voyages.

Propulsion engines fuelled with LNG will normally be of the 2-stroke type or 4-stroke type.

The two types of gas engines have different supply systems for gas to the engines.

The 2-stroke gas engines are normally designed for receiving the gas fuel in a supercritical fluid state, and at a pressure in the range of about 200 - 300 bar for LNG as fuel, and at ambient temperature (20 - 40 °C).

One high-pressure pump will normally be installed on deck for supply of LNG in a super-critical state to the engine room, and with suction/supply to the pump from the LNG storage tank.

The temperature rise through the pump for LNG is estimated to be in the range of 15-20 °C, and remaining temperature rise from about -140 °C to about ambient temperature shall according to subject invention be provided as much as practical via heat transfer from the re-liquefaction of cargo by heat exchangers on deck, and/or, by heat transfer in the vapour space of the cargo tanks.

The final heating until ambient temperature has to be provided by other heating source as steam, glycol/water-mixture, or similar.

The 4-stroke gas engines are normally designed for receiving the gas at a pressure in the range of about 3-6 bar, and at ambient temperature (20 - 40 °C).

For 4-stroke engines, the LNG will first be vaporized, and subsequently heated from the storage temperature of about - 160 °C to about ambient temperature.

Also for 4-stroke engines, and according to the subject invention, the energy for vaporization of LNG and heating of gas shall as much as practical be provided via heat transfer from the re-liquefaction of cargo in heat exchangers on deck, and/or alternatively via heat transfer by devices in the vapour space of the cargo tanks.

Similar to the system for 2-stroke engines, the final heating until ambient temperature has to be provided separately by other heating source as steam, glycol/water mixture, or similar.

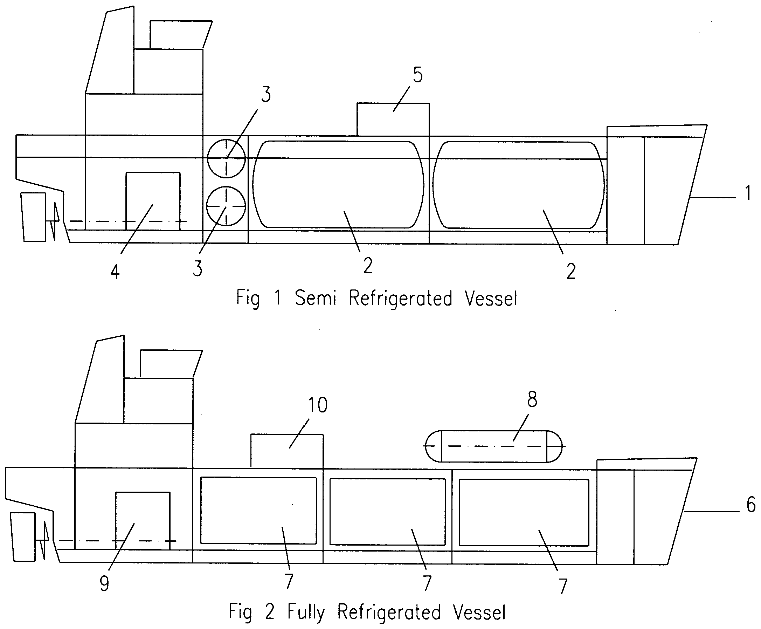

Types and locations of LNG storage tanks might be different from case to case, and typical locations are shown in attached Fig. 1 and Fig. 2.

In case all cargo tanks are provided with devices for heat exchanging in the vapour space, no additional installations are required for handling of the vaporized cargo when the ship is running on LNG.

In case heat exchanger(s) is installed outside the cargo tanks, it might additionally be necessary to install a, preferably variable, speed compressor with suction of vaporized gas from the cargo tanks.

The invention is defined the independent claims 1 and 9.

In order to visualize the subject invention, it will be described by reference to the non-limiting embodiments shown in the appended schematic figures, where:
Figure 1 is a sectional view of a first ship suitable for use of the present invention;
Figure 2 is a sectional view of a second ship suitable for use of the present invention;
Figures 3 to 8 are flow plans illustrating different preferred embodiments of the present invention.

Fig. 1 shows a typical ship of semi-refrigerated type for transportation of liquefied gas.

Two cargo tanks of pressure vessel type (cylindrical) are typically shown, but number and type of pressure vessel tanks (spherical, bi-lobe, etc.), can be different for various ship projects of semi-refrigerated type.
1 is a typical ship of semi-refrigerated type.
2 are typical cargo tanks for LPG and other liquefied cargoes as specified above.
3 are storage tank(s) for LNG as fuel.
4 are main engine(s) using LNG as energy source.
5 is a deckhouse for accommodating the installations for re-liquefaction plant, and other cargo equipment.

Fig. 2 shows a typical ship of fully refrigerated type for transportation of liquefied gas.

Three prismatic cargo tanks are typically shown, but number of cargo tanks can be different for various ship projects of fully refrigerated type.
6 is a typical ship of fully refrigerated type.
7 is typical cargo tanks for LPG and other liquefied cargoes as specified above.
8 is storage tank(s) for LNG as fuel.
9 is main engine(s) using LNG as energy source.
10 is a deckhouse for accommodating the installations for re-liquefaction plant, and other cargo equipment.

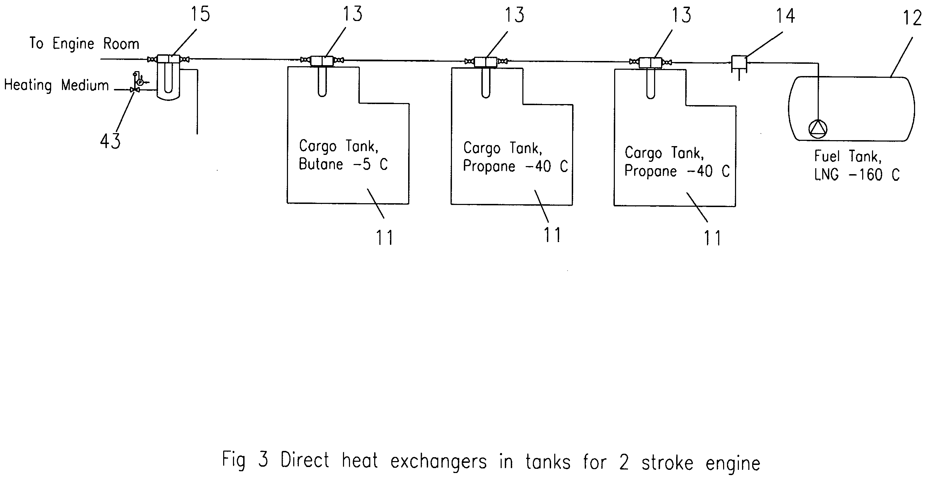

Fig. 3 shows a typical flow scheme for a liquefied gas carrier of fully refrigerated type with main engine(s) of 2-stroke type, and with direct heat exchanging of liquefied cargo and fuel gas in the vapour space of cargo tanks.
11 is three cargo tanks of fully refrigerated type.
12 is storage tank for LNG as fuel, and with integral devices for supply of LNG (submerged pump as shown, or similar).
13 is heat exchangers in the vapour space of cargo tanks.
14 is high-pressure pump for LNG.
15 is heat exchanger for super-critical LNG, and for reaching ambient temperature with steam (or similar) as heating medium.
43 is a temperature control valve for the fuel to the engine.

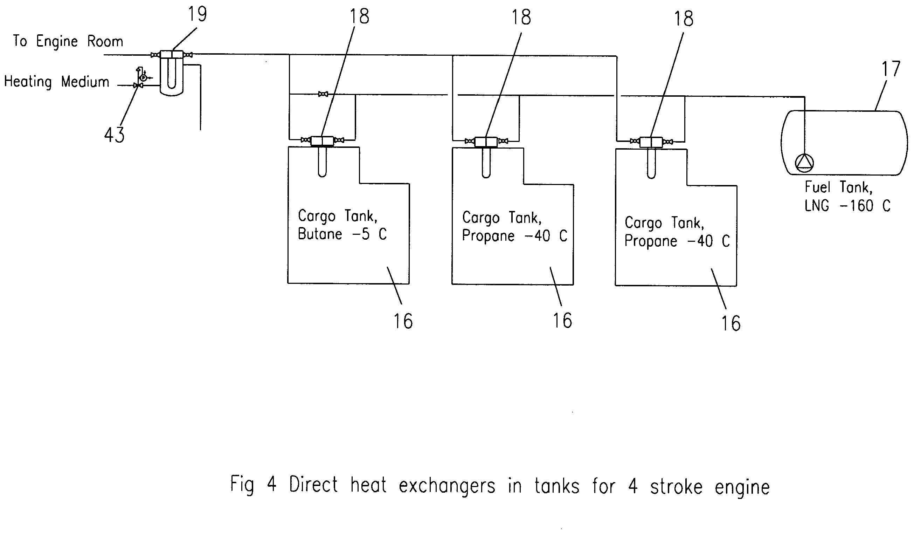

Fig. 4 shows a typical flow scheme for a liquefied gas carrier of fully refrigerated type, and with main engine(s) of 4-stroke type, and with direct heat exchanging of liquefied cargo and fuel gas in the vapour space of cargo tanks.
16 is three cargo tanks of fully refrigerated type.
17 is storage tank for LNG as fuel, and with integral devices for supply of LNG (submerged pump as shown, or similar).
18 is heat exchangers in the vapour space of cargo tanks.
19 is heat exchanger for vaporized LNG, and for reaching ambient temperature with steam (or similar) as heating medium.
43 is a temperature control valve for the fuel to the engine.

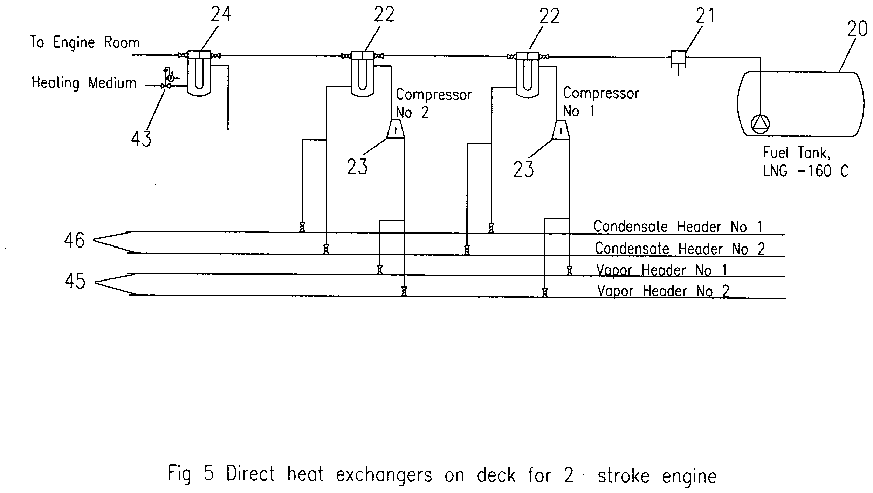

Fig. 5 shows a typical flow scheme for a liquefied gas carrier of fully refrigerated type, and with main engine(s) of 2-stroke type, and with heat exchanging between liquefied cargo and super-critical fuel gas in heat exchangers on deck.
20 is storage tank for LNG as fuel, and with integral devices for supply of LNG (submerged pump as shown, or similar).
21 is high-pressure pump for LNG.
22 is heat exchangers installed on deck, and two separate heat exchangers are shown indicating that two separate cargoes can be handled simultaneously.
23 is compressors for suction of vaporized cargo from cargo tanks, and with delivery through heat exchangers with sufficient pressure for condensate return to cargo tanks.
24 is heat exchanger for super-critical LNG, and for reaching ambient temperature with steam (or similar) as heating medium.
43 is a temperature control valve for the fuel to the engine.
45 is vapour headers with branches to the cargo tanks (not shown).
46 is condensate headers with branches to the cargo tanks (not shown).

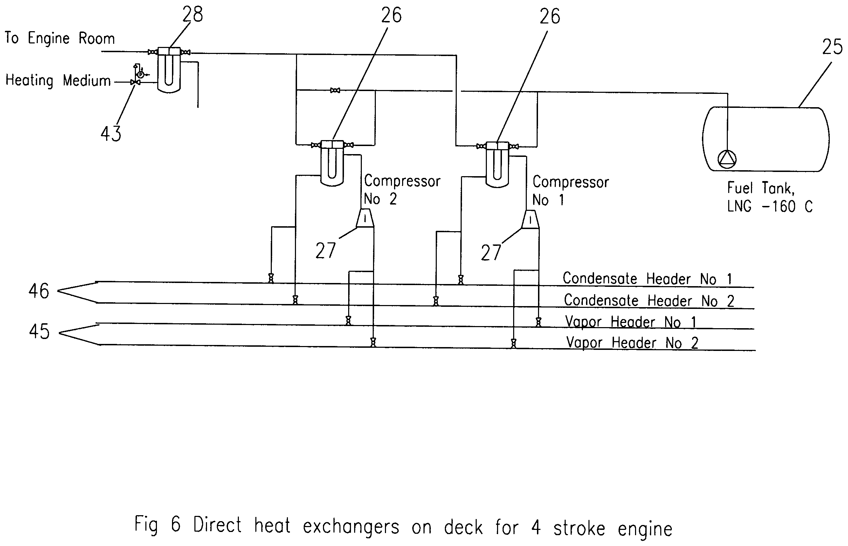

Fig. 6 shows a typical flow scheme for a liquefied gas carrier of either fully refrigerated, or semi-refrigerated type, and with main engine(s) of 4-stroke type, and with heat exchanging between liquefied cargo and LNG in heat exchangers on deck.
25 is storage tank for LNG as fuel, and with integral devices for supply of LNG (submerged pump as shown, or similar).
26 is heat exchangers installed on deck, and two separate heat exchangers are shown indicating that two separate cargoes can be handled simultaneously.
27 is compressors for suction of vaporized cargo from cargo tanks, and with delivery through heat exchangers with sufficient pressure for condensate return to cargo tanks.
28 is heat exchanger for vaporized LNG, and for reaching ambient temperature with steam (or similar) as heating medium.
43 is a temperature control valve for the fuel to the engine.
45 is vapour headers with branches to the cargo tanks (not shown).
46 is condensate headers with branches to the cargo tanks (not shown).

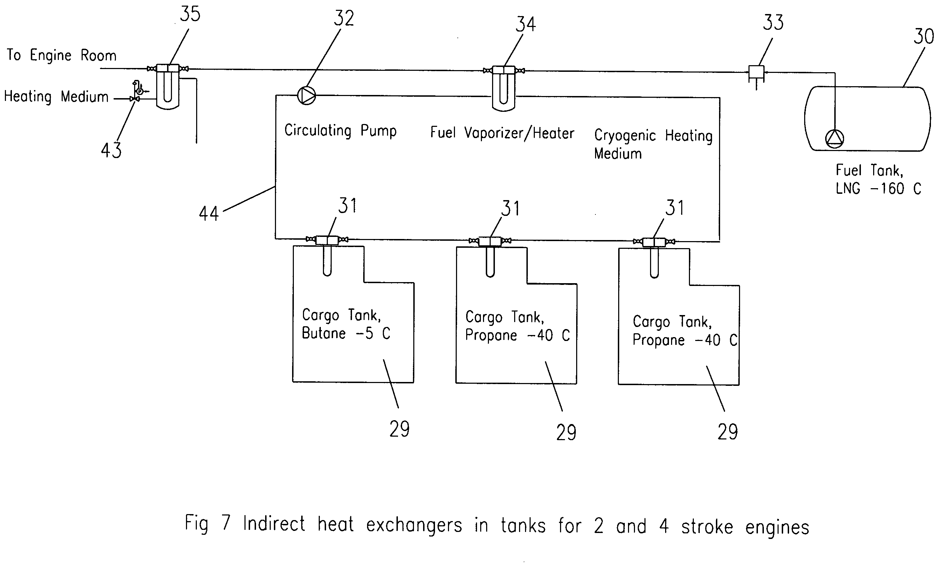

Fig. 7 shows a typical flow scheme for a liquefied gas carrier of fully refrigerated type, and with main engine(s) of either 2-stroke or 4-stroke type, and firstly with indirect heat exchanging in the vapour space of cargo tanks between vaporized cargo and a circulating cryogenic fluid, and secondly indirect heat exchanging between the circulating cryogenic fluid and LNG as fuel in another heat exchanger on deck.
29 is three cargo tanks of fully refrigerated type.
30 is storage tank for LNG as fuel, and with integral devices for supply of LNG (submerged pump as shown, or similar).
31 is heat exchangers in the vapour space of cargo tanks, and arranged for indirect heating to a circulating cryogenic fluid.
32 is a circulating pump for cryogenic fluid (propane, or similar) for indirect heat transfer.
33 is high-pressure pump for LNG (in case of 2-stroke main engine).
34 is heat exchanger on deck for heat exchanging between circulating cryogenic fluid and LNG as fuel.
35 is heat exchanger for super-critical LNG (2-stroke) or vaporized LNG (4-stroke), and for reaching ambient temperature with steam (or similar) as heating medium.
43 is a temperature control valve for the fuel gas to the engine.
44 is a closed loop for the cryogenic fluid.

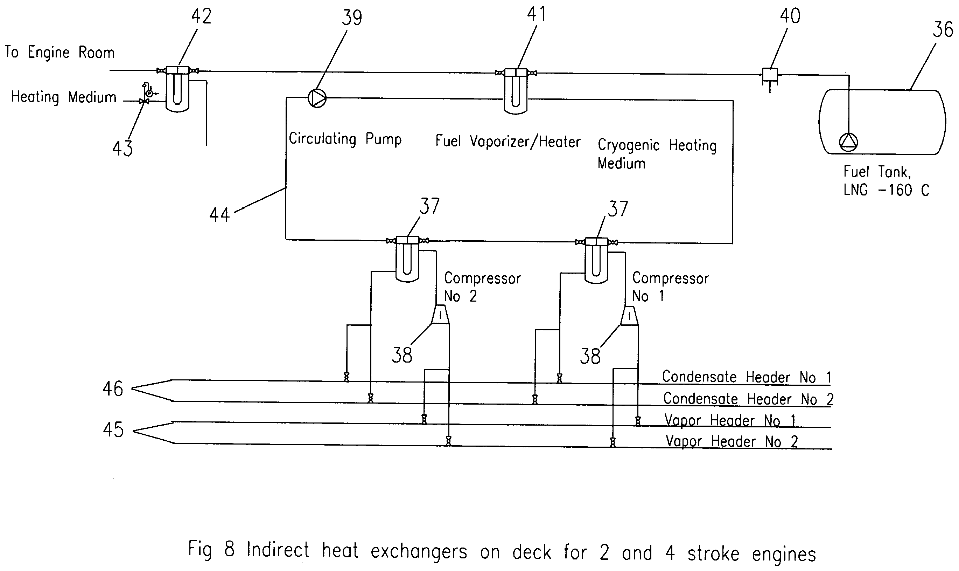

Fig. 8 shows a typical flow scheme for a liquefied gas carrier of either fully refrigerated, or semi-refrigerated type, and with main engine(s) of either 2-stroke or 4-stroke type, and firstly with indirect heat exchanging in heat exchangers on deck between vaporized cargo and a circulating cryogenic fluid, and secondly indirect heat exchanging between the circulating cryogenic fluid and LNG as fuel in another heat exchanger on deck.
36 is storage tank for LNG as fuel, and with integral devices for supply of LNG (submerged pump as shown, or similar).
37 is heat exchangers installed on deck, and two separate heat exchangers are shown indicating that two separate cargoes can be handled simultaneously.
38 is compressors for suction of vaporized cargo from cargo tanks, and with delivery through heat exchangers with sufficient pressure for condensate return to cargo ta n ks.
39 is a circulating pump for cryogenic fluid (propane, or similar) for indirect heat transfer.
40 is high-pressure pump for LNG (in case of 2-stroke main engine).
41 is heat exchanger on deck for heat exchanging between circulating cryogenic fluid and LNG as fuel.
42 is heat exchanger for vaporized LNG, and for reaching ambient temperature with steam (or similar) as heating medium.
43 is a temperature control valve for the fuel gas to the engine.
44 is a closed loop for the cryogenic fluid.
45 is vapour headers with branches to the cargo tanks (not shown).
46 is condensate headers with branches to the cargo tanks (not shown).

### Process Description

In case of 2 stoke engine, and with reference to figure 3, the LNG fuel (12) is delivered to a high pressure booster pump (13) which are boosting the pressure over and above the critical pressure. At this pressure there is no vaporization of the liquid, and the LNG is successively heated by condensing cargo in the heat exchangers (13) installed i the vapour space of the tanks. Finally the LNG fuel is heated over and above the critical temperature in the supercritical heat exchanger (15), to the temperature required by the engine. This is regulated by a temperature control valve (43), which is regulating the heat supply to the heat exchanger.

Alternatively, and with reference to figure 5, the condensation of cargo may take place in heat exchangers on deck (22). The compressors (23) are drawing the cargo from the vapour header (45) and are returning it to the tanks through the condensate headers (46).

In case of a 4 stroke engine, and with reference to figure 4, the LNG fuel (17) is delivered without boosting in parallel to the heat exchangers (18) where the LNG is vaporizing at constant temperature. The fuel gas is further heated in an ordinary gas heater (19), to the temperature required by the engine. This is regulated by a temperature control valve (43), which is regulating the heat supply to the heat exchanger.

Alternatively, and with reference to figure 6, the condensation of cargo may take place in heat exchangers on deck (26). The compressors (27) are drawing the cargo from the vapour headers (45) and are returning it to the tanks through the condensate headers (46).

Alternatively for both cases and with reference to figure 7, the condensation of cargo takes place in the cargo tanks (37) and the heat is brought to a single vaporizer/fuel heater (34) on deck by a circulating cryogenic heating medium (44).

Alternatively for both cases, and with reference to figure 8, both condensation of cargo (37) and vaporization/heating of fuel (41) takes place in heat exchangers on deck. Similar to figure 6, the compressors (37) are drawing the cargo from the vapour headers (45) and are returning it to the tanks through the condensate headers (46).

## Claims

1. A method for vaporizing and/or heating a first liquefied gas for use as fuel for a ship (1, 6) having at least one cargo tank (2, 7) containing a second liquefied gas, the first liquefied gas having a lower boiling point than the second liquefied gas, the heat for vaporization and/or heating the first liquefied gas being taken at least partially from the contents of said at least one cargo tank,
**characterized in that** at least part of said heat Is obtained through heat exchange with and condensation of boil-off from the contents of said at least one cargo tank.

2. A method according to claim 1,
wherein the first liquefied gas is LNG.

3. A method according to claim 1,
wherein the second liquefied gas has a boiling point higher than - 105 °C.

4. A method according to claim 1,
wherein the boiling point of the second liquefied gas Is higher than - 48 °C.

5. A method according to claim 1,
wherein the second liquefied gas is LPG.

6. A method according to claim 1,
wherein the heat exchange between LNG as fuel and cargo boil-off is made by heat exchanging In a vapour space In an upper part of said at least one cargo tank (16).

7. A method according to claim 1,
wherein the heat exchange between LNG as fuel and cargo boll-off is made In separately installed heat exchangers (22, 26).

8. A method according to claim 1,
wherein the heat exchange between LNG as fuel and cargo boil-off is made indirectly by a circulating cryogenic medium in a loop (44) including a second heat exchanger (34) between the cryogenic medium and the LNG to be heated.

9. An arrangement for providing liquefied natural gas (LNG) as fuel for propulsion of a ship (1, 6) having at least one cargo tank (11) for liquefied gas having a higher temperature than LNG, said arrangement comprising a source of LNG (12, 20), and at least one first heat exchanger (13, 22) for vaporizing and/or heating the LNG with heat being taken at least partially from the contents of said at least one cargo tank,
**characterized by** means for providing said at least one first heat exchanger with heat from boil-off gases from said at least one cargo tank.

10. An arrangement according to claim 9,
comprising back-up module(s) only for re-liquefaction of cargo boil-off not condensed by vaporization of LNG.

11. An arrangement according to claim 9,
wherein said first heat exchanger (13, 31) Is located in a vapour space at an upper part of a cargo tank (11, 29).

12. An arrangement according to claim 9,
wherein said first heat exchanger is a separately installed heat exchanger (22, 26).

13. An arrangement according to claim 9,
comprising a loop (44) circulating cryogenic medium for indirect heat exchange between LNG as fuel and cargo boil-off, a second heat exchanger (34) in the loop (44) exchanging heat between the cryogenic medium and the LNG to be heated.

14. An arrangement according to claim 9,
wherein a compressor (23) is provided for delivery of cargo boil-off to said first heat exchanger (26).

15. An arrangement according to claim 14,
wherein the compressor (23) Is also used in a back-up system for re-liquefaction of cargo boil-off.

## Patentansprüche

1. Verfahren zum Verdampfen und/oder Erwärmen eines ersten verflüssigten Gases zur Verwendung als Kraftstoff für ein Schiff (1, 6), das wenigstens einen Ladetank (2, 7) aufweist, der ein zweites verflüssigtes Gas enthält, wobei das erste verflüssigte Gas einen tieferen Siedepunkt als das zweite verflüssigte Gas aufweist, wobei die Wärme zum Verdampfen und/oder Erwärmen des ersten verflüssigten Gases wenigstens teilweise aus dem Inhalt des wenigstens einen Ladetanks genommen wird,
**dadurch gekennzeichnet, dass** wenigstens ein Teil der Wärme durch Wärmetausch mit und Kondensation von Abdampf des Inhalts des wenigstens einen Ladetanks erhalten wird.

2. Verfahren gemäß Anspruch 1,
wobei das erste verflüssigte Gas LNG ist.

3. Verfahren gemäß Anspruch 1,
wobei das zweite verflüssigte Gas einen Siedepunkt von höher als - 105 °c aufweist.

4. Verfahren gemäß Anspruch 1,
wobei der Siedepunkt des zweiten verflüssigten Gases höher als -48 °C ist.

5. Verfahren gemäß Anspruch 1,
wobei das erste zweite Gas LPG ist.

6. Verfahren gemäß Anspruch 1,
wobei der Wärmetausch zwischen LNG als Treibstoff und Ladungsabdampf durch Wärmetausch in einem Dampfraum in einem oberen Teil des wenigstens einen Ladetanks (16) durchgeführt wird.

7. Verfahren gemäß Anspruch 1,
wobei der Wärmetausch zwischen LNG als Treibstoff und Lafeabdampf in getrennt eingerichteten Wärmetauschern (22, 26) durchgeführt wird.

8. Verfahren gemäß Anspruch 1,
wobei der Wärmetausch zwischen LNG als Treibstoff und Lafeabdampf indirekt durchgeführt wird, in dem ein kryogenes Medium in einer Schleife (44) zirkuliert wird, die einen zweiten Wärmetauscher (34) zwischen dem kryogenen Medium und dem zu erwärmenden LNG umfasst.

9. Anordnung zum Bereitstellen von verflüssigtem Erdgas (LNG) als Kraftstoff zum Antreiben eines Schiffs (1, 6), das wenigstens einen Ladetank (11) für ein verflüssigtes Gas mit einer höheren Temperatur als LNG aufweist, wobei die Anordnung eine Quelle von LNG (12, 20) und wenigstens einen Wärmetauscher (13, 22) zum Verdampfen und/oder Erwärmen des LNG mit Wärme, die wenigstens teilweise aus dem Inhalt des wenigstens einen Ladetanks genommen wird, umfasst, **gekennzeichnet durch** Einrichtungen zum Beliefern des wenigstens einen Wärmetauschers mit Wärme aus Abdampfgasen aus dem wenigstens einen Ladetank.

10. Anordnung gemäß Anspruch 9,
umfassend Unterstützungsmodul(e) nur zum Wiederverflüssigen von Ladungsabdampf, der nicht durch Verdampfen von LNG kondensiert wird.

11. Anordnung gemäß Anspruch 9,
wobei der erste Wärmetauscher (13, 31) in einem Dampfraum an einem oberen Teil eines Ladetanks (11, 29) angeordnet ist.

12. Anordnung gemäß Anspruch 9,
wobei der erste Wärmetauscher ein getrennt eingerichteter Wärmetauscher (22, 26) ist.

13. Anordnung gemäß Anspruch 9,
umfassend eine Schleife (44), die kryogenes Medium zum indirekten Wärmetausch zwischen LNG als Treibstoff und Ladungsabdampf zirkuliert, wobei ein zweiter Wärmetauscher (34) in der Schleife (44) Wärme zwischen dem kryogenen Medium und dem zu erwärmten LNG austauscht.

14. Anordnung gemäß Anspruch 9,
wobei ein Kompressor (23) zum Befördern von Ladungsabdampf zu dem ersten Wärmetauscher (26) bereitgestellt ist.

15. Anordnung gemäß Anspruch 14,
wobei der Kompressor (23) auch in einem Unterstützungssystem zum Wiederverflüssigen von Ladungsabdampf verwendet wird.

## Revendications

1. Procédé pour la vaporisation et/ou le chauffage d'un premier gaz liquéfié destiné à être utilisé en tant que carburant pour un navire (1, 6) ayant au moins une citerne à cargaisons (2, 7) contenant un second gaz liquéfié, le premier gaz liquéfié ayant un plus faible point d'ébullition que le second gaz liquéfié, la chaleur pour la vaporisation et/ou le chauffage du premier gaz liquéfié étant prise au moins en partie à partir du contenu de ladite au moins une citerne à cargaisons,
**caractérisé en ce qu'**au moins une partie de ladite chaleur est obtenue par échange de chaleur avec les évaporations provenant du contenu de ladite au moins une citerne à cargaisons et condensation de celles-ci.

2. Procédé selon la revendication 1,
dans lequel le premier gaz liquéfié est du GNL.

3. Procédé selon la revendication 1,
dans lequel le second gaz liquéfié a un point d'ébullition supérieur à -105 °C.

4. Procédé selon la revendication 1,
dans lequel le point d'ébullition du second gaz liquéfié est supérieur à -48 °C.

5. Procédé selon la revendication 1,
dans lequel le second gaz liquéfié est du GPL.

6. Procédé selon la revendication 1,
dans lequel l'échange de chaleur entre du GNL en tant que carburant et des évaporations de cargaisons est effectué par échange de chaleur dans un espace de vapeur dans une partie supérieure de ladite au moins une citerne à cargaisons (16).

7. Procédé selon la revendication 1,
dans lequel l'échange de chaleur entre du GNL en tant que carburant et des évaporations de cargaisons est effectué dans des échangeurs de chaleur installés séparément (22, 26).

8. Procédé selon la revendication 1,
dans lequel l'échange de chaleur entre du GNL en tant que carburant et des évaporations de cargaisons est effectué indirectement par un fluide cryogénique en circulation dans une boucle (44) comprenant un second échangeur de chaleur (34) entre le fluide cryogénique et le GNL à chauffer.

9. Agencement pour la fourniture de gaz naturel liquéfié (GNL) en tant que carburant pour la propulsion d'un navire (1, 6) ayant au moins une citerne à cargaisons (11) pour du gaz liquéfié ayant une température plus élevée que le GNL, ledit agencement comprenant une source de GNL (12, 20) et au moins un premier échangeur de chaleur (13, 22) pour la vaporisation et/ou le chauffage du GNL, la chaleur étant prise au moins en partie à partir du contenu de ladite au moins une citerne à cargaisons,
**caractérisé par** un moyen pour fournir audit au moins un premier échangeur de chaleur de la chaleur provenant de gaz d'évaporation provenant de ladite au moins une citerne à cargaisons.

10. Agencement selon la revendication 9,
comprenant un ou plusieurs modules de secours seulement pour la re-liquéfaction d'évaporations de cargaisons non condensées par la vaporisation de GNL.

11. Agencement selon la revendication 9,
dans lequel ledit premier échangeur de chaleur (13, 31) est situé dans un espace de vapeur au niveau d'une partie supérieure d'une citerne à cargaisons (11, 29).

12. Agencement selon la revendication 9,
dans lequel ledit premier échangeur de chaleur est un échangeur de chaleur installé séparément (22, 26).

13. Agencement selon la revendication 9,
comprenant une boucle (44) faisant circuler du fluide cryogénique pour l'échange de chaleur indirect entre du GNL en tant que carburant et des évaporations de cargaisons, un second échangeur de chaleur (34) dans la boucle (44) échangeant de la chaleur entre le fluide cryogénique et le GNL à chauffer.

14. Agencement selon la revendication 9,
dans lequel un compresseur (23) est prévu pour l'acheminement d'évaporations de cargaisons vers ledit premier échangeur de chaleur (26).

15. Agencement selon la revendication 14,
dans lequel le compresseur (23) est également utilisé dans un système de secours pour la re-liquéfaction d'évaporations de cargaisons.
